# EUROPÄISCHE PATENTANMELDUNG

(11) **EP 4 464 752 A1**
(43) Veröffentlichungstag der Anmeldung: **20.11.2024**
(21) Anmeldenummer: 23174116.6
(22) Anmeldetag: 17.05.2023
(51) Int. Cl.: C09D 5/00, C09D 5/44

(54) **VERFAHREN ZUR BESCHICHTUNG VON HARTEN OBERFLÄCHEN MIT PIGMENTFILMEN**

(71) Anmelder: Lignocolor GmbH, 48308 Senden (DE)
(72) Erfinder: STREHMEL, Veronika, 47798 Krefeld (DE); STREHMEL, Bernd, 47798 Krefeld (DE); KEPKOW, Maximilian, 40591 Düsseldorf (DE); HEINZ, Markus, 39221 Bördeland - Eickendorf (DE); WANG, Qunying, 47799 Krefeld (DE); PRIETO, Jorge, 48308 Senden (DE); PRIETO, Marcel, 48308 Senden (DE)
(74) Vertreter: Fabry, Bernd

(57) **Zusammenfassung**

Vorgeschlagen wird ein Verfahren zur Beschichtung von harten Oberflächen mit Pigmentfilmen durch UV- und/oder NIR-induzierte kationische Polymerisation, bei dem man oxidische Pigmente mit nukleophil-desaktivierter Oberfläche, Epoxidverbindungen, UV- und/oder NIR-Sensibilisatoren und Oniumsalze zu einer Mischung verarbeitet, diese auf die zu beschichtende Oberfläche aufträgt; und die Oberfläche mit einer UV- und/oder NIR-Lichtquelle bestrahlt, wobei die Mischung verfilmt.

## Beschreibung

### Gebiet der Erfindung

Die Erfindung befindet sich auf dem Gebiet der Lacke und Farben und betrifft ein Verfahren zur Herstellung von Farblacken mit oxidischen Pigmenten, bei dem die Verfilmung über den Weg der kationischen Polymerisation gelingt.

### Technologischer Hintergrund

Lacke sind flüssige oder auch pulverförmige Beschichtungsstoffe, die dünn auf Gegenstände aufgetragen werden und durch chemische oder physikalische Vorgänge zu einem durchgehenden festen Film gehärtet werden. Eine in den letzten Jahren immer häufiger eingesetzte Methode zur Verfilmung von Lacken besteht in der kationischen Polymerisation. Dabei werden den Lackzubereitungen als Bindemittel Monomere wie beispielsweise Epoxide oder Vinylverbindungen zugesetzt, die unter dem Einfluss von UV- oder NIR-Strahlung dann polymerisieren und einen harten Film ergeben. Gegenüber der ansonsten gängigen Trocknung, bei der das organische Lösungsmittel verdunstet, ist dieses Verfahren natürlich deutlich umweltverträglicher, was speziell bei industriellen Abläufen natürlich auch eine deutliche Vereinfachung und Kostenersparnis bedeutet. Durch diese Form der Lackapplikation wird die VOC Richtlinie entsprechend der gesetzlichen Vorgaben umgesetzt.

Nachteilig ist jedoch, dass die kationische Polymerisation versagt, wenn es darum geht, Farblacke zu verfilmen, die Farbpigmente mit oxidischer Struktur, wie beispielsweise Rutil oder die verschiedenfarbigen Eisenoxide enthalten. In diesen Fällen muss dann doch auf Lösungsmittellacke zurückgegriffen werden, mit denen die oben geschilderten Probleme verbunden sind.

### Stand der Technik

Der Einsatz der kationischen Polymerisation zur Verfilmung von Klarlacken ist aus dem Stand der Technik seit langer Zeit bekannt:

In der EP 0000407 A1 (AKZO) werden strahlenhärtbare Überzugsmittel auf Basis eines mit Acrylsäure veresterten OH-funktionellen Polyesterharzes, einer Vinylverbindung, eines Photoinitiators und eines Polyisocyanates beschrieben. In einem ersten Härtungsschritt erfolgt die Strahlenhärtung mittels UV-Licht und in einem zweiten Härtungsschritt erhält der Überzug durch die OH/NCO-Vernetzung seine Endhärte.

In der EP 0247563 A1 (NOF) werden mittels UV-Strahlung härtbare Klarlacke auf Basis einer poly(meth)acryloylfunktionellen Verbindung, eines Polyolmono(meth)acrylates, eines Polyisocyanates, eines Lichtstabilisators und eines Photoinitiators beschrieben. Ein Teil der strahlenhärtbaren Bindemittel enthält Hydroxyfunktionen, die mit dem vorhandenen Polyisocyanat reagieren können und eine zusätzliche Härtungsmöglichkeit bieten.

Die EP 0540884 A1 (HERBERTS) beschreibt beispielsweise ein Verfahren zur Herstellung einer Mehrschichtlackierung für die Kraftfahrzeugserienlackierung durch Auftrag einer Klarlackschicht auf eine getrocknete bzw. gehärtete Basislackschicht, wobei das Klarlackbeschichtungsmittel durch radikalische und/oder kationische Polymerisation härtbare Bindemittel enthält, und die Härtung mittels energiereicher Strahlung durchgeführt wird.

Ferner offenbart die US 4,668,529 (BERRY) ein mittels UV-Strahlung härtbares IK-Beschichtungsmittel für die Reparaturlackierung. Als UV-härtbare Bindemittelkomponenten werden Tripropylenglykoltriacrylat und Trimethylpropantriacrylat eingesetzt. Zusätzlich ist ein Epoxidharz auf Basis eines Bisphenol A Diglycidylethers enthalten.

DE 2854011 C2 (GENERAL ELECTRIC) beschreibt eine wärmehärtende Zusammensetzung enthaltend ein kationisches, polymerisierbares, organisches Material, wie beispielsweise ein Epoxidharz, sowie ein aromatisches lodoniumsalz. Die Produkte können auf Substrate aufgetragen und als Lacke verwendet werden.

### Aufgabe der Erfindung

Die Aufgabe der vorliegenden Erfindung hat daher darin bestanden, ein Verfahren zu entwickeln, mit dem es gelingt, Farblacke, die oxidische Pigmente enthalten, mit Hilfe der kationischen Polymerisation, also ohne Verdunsten von Lösungsmitteln, zu verfilmen.

### Beschreibung der Erfindung

Die vorliegende Erfindung betrifft ein Verfahren zur Beschichtung von harten Oberflächen mit Pigmentfilmen durch UV- und/oder NIR-induzierte kationische Polymerisation, umfassend die folgenden Schritte:
(i) Bereitstellen einer zu beschichtenden Oberfläche;
(ii) Bereitstellen mindestens eines oxidischen Pigmentes mit nukleophil-desaktivierter Oberfläche;
(iii) Bereitstellen mindestens einer Epoxidverbindung;
(iv) Bereitstellen mindestens eines UV- und/oder NIR-Sensibilisators;
(v) Bereitstellen mindestens einer Oniumverbindung; sowie
(vi) Bereitstellen einer UV- und/oder NIR-Lichtquelle;
wobei man
(a) die Komponenten (ii), (iii), (iv), (v) zu einer Mischung verarbeitet,
(b) die Mischung auf die zu beschichtende Oberfläche (i) aufträgt; und
(c) die Oberfläche mit der Lichtquelle (vi) bestrahlt, wobei die Mischung verfilmt.

Überraschenderweise wurde gefunden, dass die kationische Polymerisation von Epoxidverbindungen in Gegenwart von oxidischen Pigmenten gelingt, wenn deren nukleophile Oberfläche desaktiviert wird, beispielsweise durch Verkapselung, Ummantelung mit hydrophoben fluorfreien makromolekularen Verbindungen, Silanisierung oder Stärke-hydrophobierung.

### Harte Oberflächen

Die Natur der zu beschichtenden Oberflächen ist wenig kritisch. Es kommen dafür Kunststoffe, Metalle, Stein, Keramik oder auch natürliche Materialien wie Holz in Frage. Vorzugsweise werden Bleche beschichtet, wie sie als Karosserieteile im Fahrzeugbau verwendet werden.

### Oxidische Pigmente

Die Anmelderin hat gefunden, dass die Ursache für die bisher erfolglose kationische Polymerisation in Gegenwart von oxidischen Pigmenten auf die nukleophile Oberfläche der Pigmentteilchen zurückzuführen ist. Die Lehre der vorliegenden Erfindung besteht daher darin, die nukleophile Oberfläche zu desaktivieren. Dies kann in unterschiedlicher Weise erfolgen, beispielsweise durch
- Verkapselung,
- Silanisierung oder
- Stärkehydrophobierung.

Als oxidische Pigmente kommen dabei vor allem Rutil (TiOz) sowie die verschieden gefärbten Eisenoxide in Betracht.

**Verkapselung bzw. Ummantelung.** Die Verkapselung bzw. Ummantelung erfolgt vorzugsweise mit Hilfe von (Meth)-Acrylverbindungen, die im Zuge einer Polymerisation die Teilchen einschließen. Geeignete (Meth)Acrylverbindungen (MA-1 bis MA-7) sind nachfolgend wiedergegeben, ohne dass es sich dabei um eine abschließende Aufzählung handeln würde:

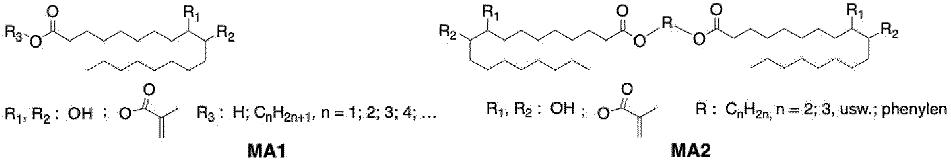

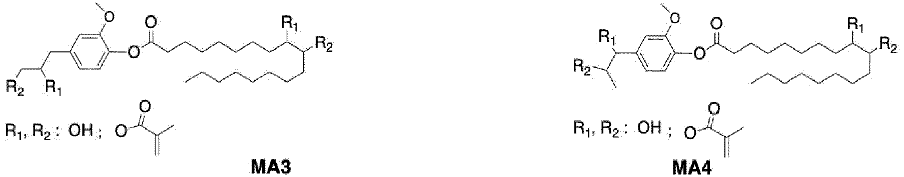

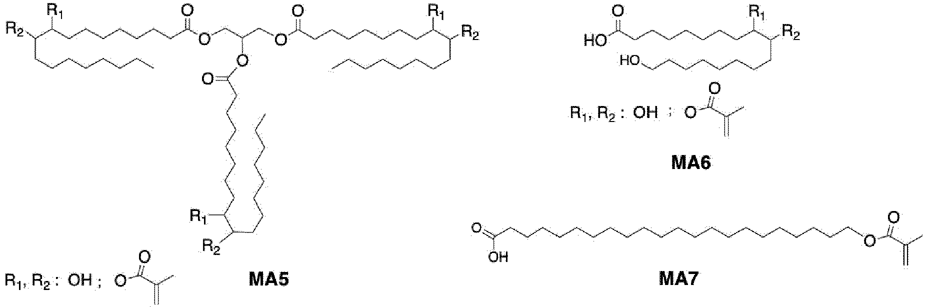

Eine geeignete Vorgehensweise zur Verkapselung der Pigmente besteht darin, dies in einer Miniemulsion durchzuführen. Dazu werden die Pigmente und die (Meth)acrylverbindungen beispielsweise in einem Gewichtsverhältnis von etwa 1:0,8 bis 1:1,2, vorzugsweise etwa 1:1 in einem Lösungsmittel vorgelegt. Hierbei handelt es sich vorzugsweise um Wasser, gegebenenfalls in Mischung mit einem organischen Solvens, wie z.B. DMSO. Zur Emulsionsbildung empfiehlt sich auch die Zugabe üblicher Mengen an Emulgator, beispielsweise von anionischen oder nichtionischen Tensiden. Die Homogenisierung der Mischung kann beispielsweise durch Hochdruck oder Ultraschall erfolgen. Zum Start der Polymerisation wird ein üblicher Initiator hinzugegeben; solche Verfahren sind aus dem Stand der Technik dem Fachmann geläufig. Anschließend werden die Kapseln bzw. ummantelten Pigmente abgetrennt, gewaschen und getrocknet, bevor sie dann der Lackzubereitung zugefügt werden.

**Silanisierung.** Die Silanisierung stellt eine Oberflächenmodifikation dar. Hierzu werden die Pigmente mit Silanen in Kontakt gebracht. Lösungsmittel wie etwa Methanol oder Ethanol können mitverwendet werden. Geeignete Silane werden nachfolgend wiedergegeben:

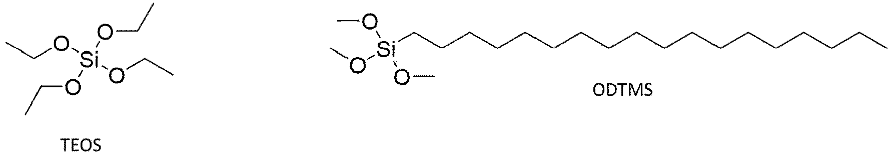

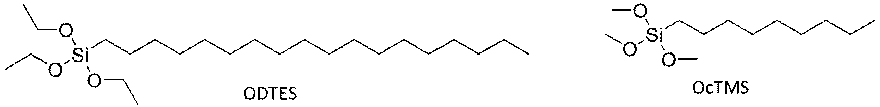

Die Bindung der Silane an die Pigmentoberflächen erfolgt durch Erhitzen der Reaktionsmischung auf etwa 90 bis etwa 120 °C über einen Zeitraum von etwa 12 bis 36 Stunden. Als Katalysator eignet sich beispielsweise Ameisensäure, die in Mengen von etwa 0,1 bis 1 Gew.-% - bezogen auf den Reaktionsansatz - zugegeben wird. Anschließend werden die modifizierten Pigmente abgetrennt, gewaschen und getrocknet, bevor sie dann der Lackzubereitung zugefügt werden.

**Stärke-Hydrophobierung.** Bei dieser Variante wird die Oberfläche der Partikel hydrophobiert. Hierzu wird in einem ersten Schritt eine natürliche Stärke, wie beispielsweise Kartoffel- oder Reisstärke chemisch modifiziert, indem man sie in einem geeigneten Lösungsmittel mit C₆-C₁₈-Fettsäurechloriden, vorzugsweise Laurylchlorid, umsetzt und im Molekül Estergruppen erzeugt. Die modifizierte Stärke kann anschließend in Ethanol eingerührt und dabei gefällt werden. Danach wird sie in einem organischen Lösungsmittel aufgenommen, und das Pigment zugegeben. Nach Homogenisierung der Mischung kann das Pigment durch Änderung der Polarität, beispielsweise durch Zugabe eines niederen Alkohols gefällt werden. Es wird dann abgetrennt, getrocknet und kann dann in die kationische Polymerisation eingesetzt werden.

Weitere Gegenstände der Erfindung betreffen daher nukleophil-desaktivierte oxidische Pigmente (synonym: oxidische Pigmente mit desaktivierter nukleophiler Oberfläche), die erhältlich sind oder erhalten werden durch folgende Schritte:
Variante 1
   (A1) Bereitstellen mindestens eines oxidischen Pigmentes;
   (A2) Bereitstellen mindestens einer (Meth)Acrylverbindung;
   (A3) Vermischen des mindestens eines oxidischen Pigments und der mindestens einen (Meth)Acrylverbindung unter Zugabe eines Lösungsmittels sowie eines Emulgators unter Ausformung einer Miniemulsion;
   (A4) Zugabe eines Polymerisationsinitiators
   (A5) Radikalische Polymerisation der (Meth)Acrylverbindungen unter Einschluss der oxidischen Polymere; sowie
   (A6) Abtrennen, Waschen und Trocknen der so erhaltenen Kapseln.
Variante 2
   (B1) Bereitstellen mindestens eines oxidischen Pigmentes;
   (B2) Bereitstellen mindestens einer Silanverbindung;
   (B3) Vermischen von mindestens einem oxidischen Pigment mit mindestens einer Silanverbindung gegebenenfalls unter Zugabe eines Lösungsmittels;
   (B4) Rühren der Mischung bei einer Temperatur von etwa 90 bis etwa 120 °C über einen Zeitraum von etwa 12 bis etwa 36 Stunden in Gegenwart eines Katalysators;
   (B5) Abtrennen, Waschen und Trocknen der so oberflächensilanisierten Pigmente.
Variante 3
   (C1) Bereitstellen mindestens eines oxidischen Pigmentes;
   (C2) Bereitstellen mindestens einer chemisch modifizierten Stärke;
   (C3) Vermischen von mindestens einem oxidischen Pigments mit der mindestens einer chemisch modifizierten Stärke, gegebenenfalls unter Zugabe eines Lösungsmittels;
   (C5) Abtrennen, Waschen und Trocknen der so oberflächenhydrophobierten Pigmente.
Bezüglich der konkreten Herstellungsweise der modifizierten Pigmente wird auf die oben genannten Ausführungsformen sowie die Beispiele verwiesen. Die drei Varianten eint der erfinderische Gedanke, die Oberfläche der oxidischen Pigmente hinsichtlich ihrer Nukleophilie zu desaktivieren, so dass es keine Abstoßungseffekte mehr gibt, die ansonsten die kationische Polymerisation beeinträchtigen.

### Epoxidverbindungen

Die Natur der Epoxidverbindungen (Komponente iii), die kationisch polymerisiert werden und zum Film aushärten, ist wenig kritisch. Aus Nachhaltigkeitsgründen ist jedoch der Einsatz von "grünen Monomeren" bevorzugt. Hierunter versteht man Epoxidverbindungen, die auf der Basis von nachwachsenden Rohstoffen hergestellt werden. Typische Beispiele sind Epoxide auf Basis von Estern ungesättigter Triglyceride, wie etwa epoxidiertes Leinöl, epoxidiertes Sonnenblumenöl oder epoxidiertes Rapsöl. Die nachfolgenden Strukturen **E1** bis **E11** sind besonders bevorzugt:

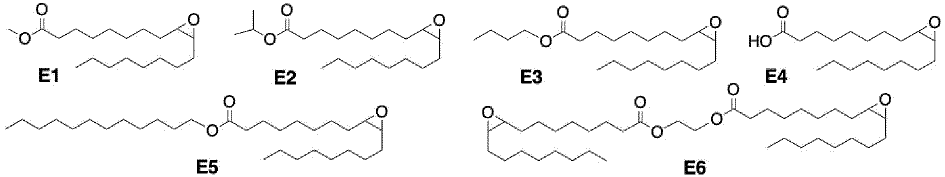

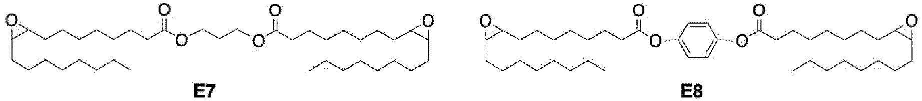

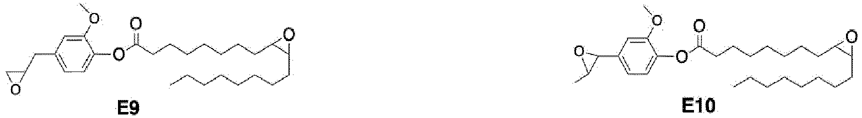

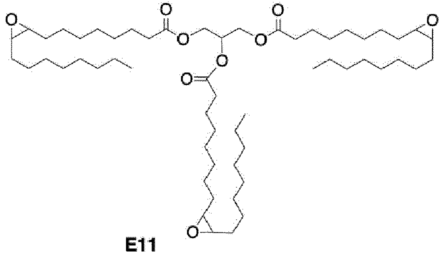

### UV- und NIR-Sensibilisatoren

Für die kationische Polymerisation bedarf es der photolytischen Generierung einer Säure, die über einen sensibilisierten Mechanismus erfolgt. Dazu wurden Sensibilisatoren eingesetzt, welche entweder im ultravioletten beziehungsweise blauen Spektralbereich absorbieren und in Ergänzung dazu im Nah-Infrarot Licht absorbieren und dort die Photoreaktion auslösen. Um diese Aufgabenstellung zu lösen, wurden moderne LEDs eingesetzt, welche mit hoher Intensität in den oben genannten Spektralbereichen emittieren. Der angeregte Zustand des Sensibilisators transferiert ein Elektron auf einen Säurebildner, welcher idealerweise sich von Onionsalzen ableitet. Bei dieser Reaktion wird der Sensibilisator oxidiert, wobei das gebildete Kationenradikal sich stabilisiert, durch Abspaltung von Säure. Diese Chemie wurde unter anderem beschrieben in J. P. Fouassier, J. Lalevée, Photoinitiators for Polymer Synthesis, Wiley-VCH, Weinheim, 2012 und S. Dadashi-Silab, S. Doran, Y. Yagci, "Photoinduced Electron Transfer Reactions for Macromolecular Syntheses" Chemical Reviews 2016, 116, 10212-10275, B. Strehmel, C. Schmitz, K. Cremanns, J. Göttert, "Photochemistry with Cyanines in the Near Infrared: A Step to Chemistry 4.0 Technologies" Chem. Eur. J. 2019, 25, 12855-12864 und B. Strehmel, C. Schmitz, C. Kütahya, Y. Pang, A. Drewitz, H. Mustroph, "Photophysics and photochemistry of NIR absorbers derived from cyanines: key to new technologies based on chemistry 4.0" Beilstein J. Org. Chem. 2020, 16, 415-444. Bevorzugte UV-Blau Sensibilisatoren umfassen beispielsweise:

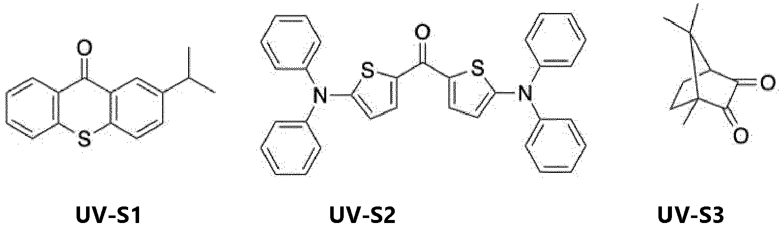

Bevorzugte NIR-Sensibilisatoren umfassen: 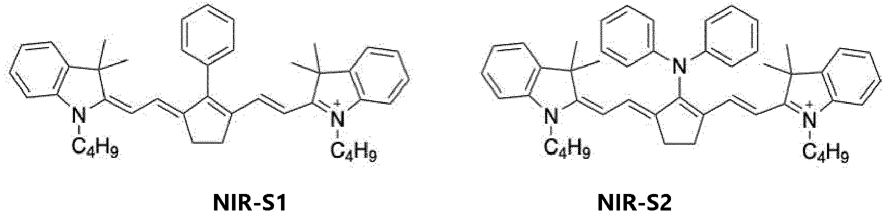 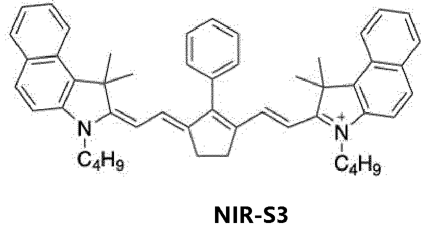 Alternativ dazu können auch UV-Sensibilisatoren eingesetzt werden, welche nach erfolgter Norrish Typ 1-Spaltung das entsprechende Benzoylradikal und ein nukleophiles Radikal bilden. Letzteres ist in der Lage, ein Elektron auf den Säurebildner zu übertragen, wobei das Radikal oxidiert wird und dieser sich letztendlich stabilisiert durch Freisetzung von Säure. Die gebildete Säure initiiert die kationische Polymerisation von Epoxiden. Diese Art von Photochemie wurde beschrieben in H. Baumann, H. J. Timpe, H. Böttcher, "Initiatorsysteme für kationische Photopolymerisationen" Z Chem. 1983, 23, 394-402, H. J. Timpe, H. Baumann, Photopolymere, Deutscher Verlag für Grundstoffindustrie, Leipzig, 1988 und Y. Y. Durmaz, N. Moszner, Y. Yagci, "Visible Light Initiated Free Radical Promoted Cationic Polymerization Using Acylgermane Based Photoinitiator in the Presence of Onium Salts" Macromolecules 2008, 41, 6714-6718.

Bevorzugte UV-Sensibilisatoren mit nukleophiler Radikalbildung umfassen:

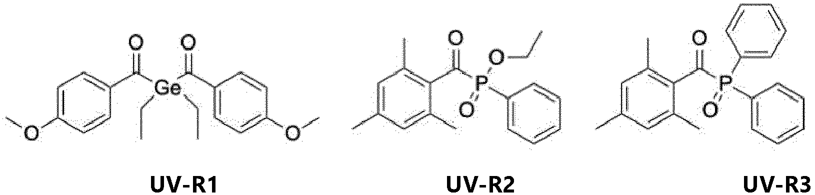

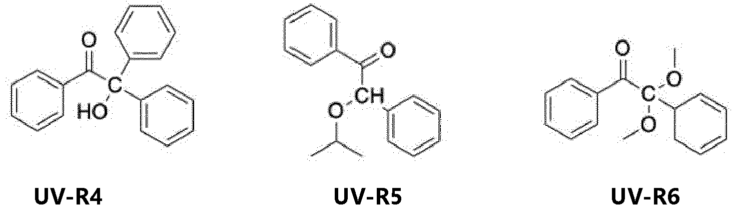

Die Sensibilisatoren können allein oder als Mischungen eingesetzt werden.

### Oniumsalze

Als Initiatoren beziehungsweise Co-Initiatoren für die Bildung von Säure mit Hilfe von Licht werden im Sinne der Erfindung Oniumsalze eingesetzt. Diese können zum Beispiel lodonium- oder Sulfoniumsalze sein (J. V. Crivello, "Cationic polymerization - iodonium and sulfonium salt photoinitiators" Adv. Polym. Sci. 1984, 62, 1-48.). Diese Verbindungen können unterhalb 300 nm oder im UV-A Bereich absorbieren. In letzterem Fall wäre die Zugabe eines Sensibilisators nicht weiter erforderlich. Durch Erweiterung des konjugierten Systems ist prinzipiell die Anregung mit UV-A bzw. blauem Licht möglich (W. Zhou, S. M. Kuebler, K. L. Braun, T. Yu, J. K. Cammack, C. K. Ober, J. W. Perry, S. R. Marder, "An efficient two-photon-generated photoacid applied to positive-tone 3D microfabrication" Science 2002, 296, 1106-1109). Beispiele für geeignete Kationen (Säurebildner) sind:

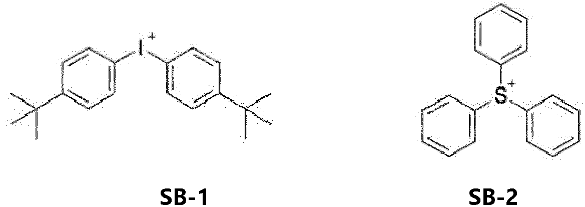

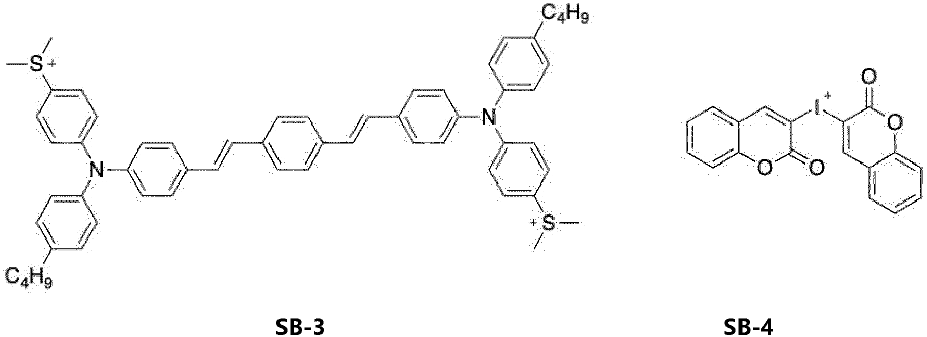

Diese Kationen werden mit einem nukleophiliearmen Anion kombiniert, welches beispielsweise durch die Anionen **A1** bis **A5** abgebildet werden kann. Für den geschulten Experten auf dem Gebiet ist es klar, dass hierbei noch weitere Anionen mit geringerer Nuleophilie eingesetzt werden können (Y. Pang, A. Shiraishi, D. Keil, S. Popov, V. Strehmel, H. Jiao, J. S. Gutmann, Y. Zou, B. Strehmel, "NIR-Sensitized Cationic and Hybrid Radical/Cationic Polymerization and Crosslinking" Angew. Chem., Int. Ed. 2021, 60, 1465-1473; K. Ren, P. Serguievski, H. Gu, O. Grinevich, J. H. Malpert, D. C. Neckers, "Relative Photoactivities of lodonium Tetrakis(pentafluorophenyl)gallates Measured by Fluorescence Probe Techniques" Macromolecules 2001, 35, 898-904; A. Shiraishi, Y. Ueda, M. Schläpfer, C. Schmitz, T. Brömme, D. Oprych, B. Strehmel, "NIR-Sensitized Photopolymerization with Iodonium Salts Bearing Weak Coordinating Anions" Journal of Photopolymer Science and Technology 2016, 29, 609-615; F. Petko, M. Galek, E. Hola, M. Topa-Skwarczynska, W. Tomal, M. Jankowska, M. Pilch, R. Popielarz, B. Graff, F. Morlet-Savary, J. Lalevee, J. Ortyl, "Symmetric Iodonium Salts Based on Benzylidene as One-Component Photoinitiators for Applications in 3D Printing" Chem. Mater. 2022, 34, 10077-10092.). Beispiele für nukleophiliearme Anionen sind:

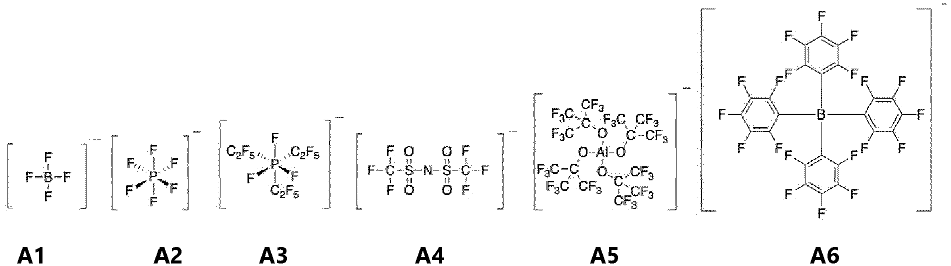

Grundsätzlich können auch Oniumsalze eingesetzt werden, die im gleichen Spektralbereich absorbieren wie die oben genannten Sensibilisatoren. In einem solchen Fall kann auf die Zugabe weiterer Sensibilisatoren verzichtet werden.

### Lichtquellen

Die kationische Polymerisation kann durch UV- und/oder NIR-Licht initiiert werden, je nachdem welcher Sensibilisator eingesetzt wird. Geeignete Lichtquellen sind z.B. UV-LED (beispielsweise 395 nm, Leistungsdichte 200 mW/cm²), LEDs mit Emission im sichtbaren Bereich (beispielsweise 410 nm, Leistungsdichte 200 mW/cm²) oder NIR-LED (820 nm, Leistungsdichte 1 mW/cm²). Vorzugsweise emittieren die LEDs im Bereich von etwa 390 bis etwa 420 nm bzw. etwa 810 bis etwa 830 nm.

### Gewerbliche Anwendbarkeit

Ein weiterer Gegenstand der Erfindung betrifft eine durch UV- und/oder NIR-Strahlung induzierte kationische Polymerisation verfilmbare Zusammensetzung enthaltend und/oder bestehend aus:
(ii) mindestens ein oxidisches Pigment mit nukleophil-desaktivierter Oberfläche;
(iii) mindestens eine Epoxidverbindung;
(iv) mindestens ein UV und/oder NIR-Sensibilisator; sowie
(v) mindestens eine Oniumverbindung.

Ebenfalls beansprucht wird die Verwendung der Zusammensetzung oben genanten Zusammensetzung zur Beschichtung von harten Oberflächen durch UV- und/oder NIR-induzierte kationische Polymerisation.

Es sei darauf hingewiesen, dass im Zusammenhang mit dem erfindungsgemäßen Verfahren offenbarte bevorzugte Ausführungsformen, insbesondere Mischungen, Reaktionsbedingungen und dergleichen, für die beanspruchten Zusammensetzungen und deren Verwendung in gleicher Weise mitgelten, so dass eine Wiederholung nicht erforderlich ist.

### BEISPIELE

### Beispiele 1 bis 7

### Desaktivierung der nukleophilen Oberfläche von Pigmenten durch Verkapselung

In einem Polymerisationsgefäß wurden Monomeren mit (Meth)Acrylatgruppe (MA-1 bis Ma-7) sowie gegebenenfalls 1,6-Hexandioldimethacrylat in einer Mischung aus Wasser und DMSO vorgelegt und mit feingemahlenem Titandioxid- oder Eisenoxid-Pigment (P) versetzt. Anschließend wurde als Emulgator Natriumdodecylsulfat (SDS) zugesetzt. Die so erhaltene Reaktionsmischung wurde anschließend durch Beschallung mit einem Sonifyer zu einer Miniemulsion verarbeitet und anschließend unter Einsatz eines radikalischen Initiators polymerisiert. Die resultierenden verkapselten Pigmente wurden gewaschen und anschließend getrocknet. Entsprechende Versuchsansätze sind in **Tabelle 1** wiedergegeben.

**Tabelle 1**

| Verkapselung von Pigmenten | | | | | | | |
|---|---|---|---|---|---|---|---|
| **Bsp.** | **MA** | **MA [g]** | **Pigment** | **P [g]** | **H₂O [ml]** | **DMSO [ml]** | **SDS [g/L]** |
| 1 | 1 | 1,2 | TiO₂ | 1,1 | 20 | 5 | 0,02 |
| 2 | 2 | 1,2 | TiO₂ | 1,2 | 20 | 5 | 0,02 |
| 3* | 3 | 1,2 | TiO₂ | 1,2 | 30 | 5 | 0,03 |
| 4 | 4 | 1,2 | TiO₂ | 1,4 | 30 | 6 | 0,02 |
| 5 | 5 | 1,2 | Fe₂O₃ | 1,1 | 20 | 5 | 0,02 |
| 6* | 6 | 1,2 | Fe₂O₃ | 1,2 | 20 | 5 | 0,02 |
| 7 | 7 | 1,2 | Fe₂O₃ | 1,2 | 30 | 5 | 0,03 |

| | | | | | | | |
|---|---|---|---|---|---|---|---|
| *) Die Reaktionsmischungen 3 und 6 enthielten zusätzlich noch bezogen auf das Methacrylat-Monomer 20 Gew.-% 1,6-Hexandiodimethacrylat als Vernetzer. | | | | | | | |

### Beispiele 8 bis 20

### Deaktivierung der nukleophilen Oberfläche von Pigmenten durch Silanisierung

In einer Apparatur mit Rührer und Rückflusskühler wurde feingemahlenes Pigment (P) vorgelegt und mit einem Silanisierungsmittel (Si) versetzt. Der Mischung wurde als Katalysator (Kat) Ameisensäure sowie gegebenenfalls als Solvens (Sol) ein Alkohol zugegeben. Danach wurde der Ansatz auf etwa 100 °C erhitzt und bei dieser Temperatur etwa 24 h gerührt. Anschließend wurde das silanisierte Pigment abgetrennt, mit Chloroform und Aceton gewaschen und getrocknet. Entsprechende Versuchsansätze sind in **Tabelle 2** wiedergegeben.

**Tabelle 2**

| Silanisierung von Pigmenten | | | | | | | |
|---|---|---|---|---|---|---|---|
| **Bsp.** | **Pigment** | **P [g]** | **Silan** | **Si [ml]** | **Solvens** | **Sol [ml]** | **Kat [Gew.-%]** |
| 8 | Rutil | 1,2 | TEOS | 1,2 | - | - | 0,2 |
| 9 | Rutil | 1,2 | TEOS | 5,0 | - | - | 0,2 |
| 10 | Rutil | 1,2 | ODTMS | 2,5 | MeOH | 2,5 | 0,2 |
| 11 | Rutil | 1,2 | ODTMS | 1,0 | MeOH | 4 | 0,2 |
| 12 | Fe-Oxid rot | 1,2 | ODTMS | 1,0 | MeOH | 4 | 0,2 |
| 13 | Fe-Oxid schwarz | 1,2 | ODTMS | 1,0 | MeOH | 4 | 0,2 |
| 14 | Fe-Oxid gelb | 1,2 | ODTMS | 1,0 | MeOH | 4 | 0,2 |
| 15 | Rutil | 1,2 | ODTES | 0,5 | EtOH | 4,5 | 0,2 |
| 16 | Rutil | 1,2 | ODTES | 1,0 | EtOH | 4 | 0,2 |
| 17 | Rutil | 1,2 | ODTES | 2,5 | EtOH | 2,5 | 0,2 |
| 18 | Rutil | 1,2 | OctMS | 0,5 | MeOH | 4,5 | 0,2 |
| 19 | Rutil | 1,2 | OctMS | 1,0 | MeOH | 4,0 | 0,2 |
| 20 | Rutil | 1,2 | OctMS | 2,5 | MeOH | 2,5 | 0,2 |

### Beispiele 21 und 22

### Deaktivierung der nukleophilen Oberfläche von Pigmenten durch Hydrophobierung

Kartoffelstärke wurde in Imidazol mit Laurylchlorid umgesetzt, wobei aus den OH-Gruppen der Stärke Esterstrukturen resultierten. Die mittels langer aliphatischer Ketten funktionalisierte Stärke wurde aus Ethanol gefällt und anschließend mit Wasser und dem jeweiligen Alkohol gewaschen, um noch vorhandene Reagenzien zu entfernen. Anschließend wurde die funktionalisierte Stärke in Chloroform dispergiert und mit Rutil bzw. rotem Eisenoxid-Pigment unter Rühren versetzt. Nach weiteren 30 Minuten Rühren wurde Methanol unter Rühren zugesetzt, wodurch das Pigment, welches durch die mit langen aliphatischen Ketten funktionalisierten Stärke modifiziert war, aus dem Gemisch durch Ausfällen abgetrennt wurde. Das mittels funktionalisierter Stärke modifizierte Pigment wurde anschließend mit Aceton gewaschen und getrocknet.

### Beispiele 23 bis 99

### Kationische Polymerisation in Gegenwart modifizierter oxidischer Pigmente

Zu 3,8 g epoxidiertem Leinöl (ELO) wurden 200 mg des jeweiligen modifizierten Pigmentes gegeben. Das Gemisch wurde in einer Kugelmühle zerkleinert und anschließend fünfmal jeweils 1 min bei 3500 U/min mit Hilfe eines Speed-Mixers homogenisiert, wodurch eine Paste erhalten wurde. Vor dem Einsatz der jeweiligen Paste wurde diese erneut dreimal für jeweils 1 min in gleicher Weise homogenisiert. Unmittelbar vor der photoinduzierten Polymerisation wurden zu jeweils 500 mg Paste 1,5 Gew-% Oniumsalz und als 1 Gew-% UV-Sensibilisator) hinzugefügt, das Gemisch gut verrührt, im Ultraschalbad für 15 min behandelt und anschließend mit einer UV-LED (395 nm, Leistungsdichte 200 mW/cm², Bestrahlungszeit 20 min). Im Fall der Bestrahlung mit einer einer NIR-LED (820 nm, Leistungsdichte 1 mW/cm²) wird ein NIR-Sensibilisator mit einer Konzentration von 0,5 wt % eingesetzt während das lodoniumsalz unter diesen Bedingungen eine Konzentration von 2 wt% hatte. Die applizierte Schichtdicke betrug 50 Mikrometer. Dabei wird ein fester pigmentierter Film erhalten.

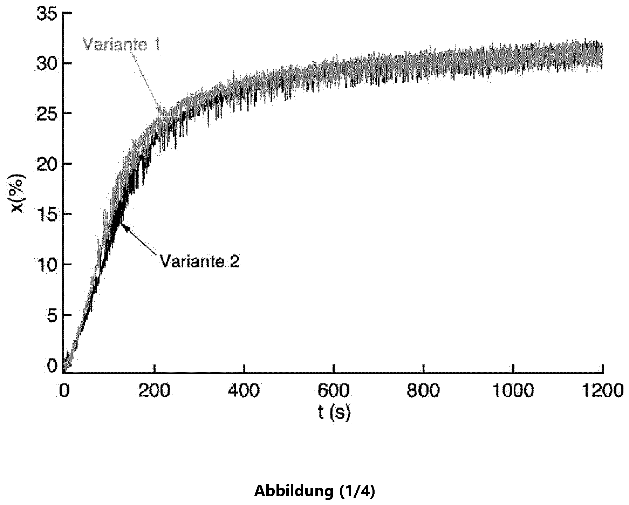

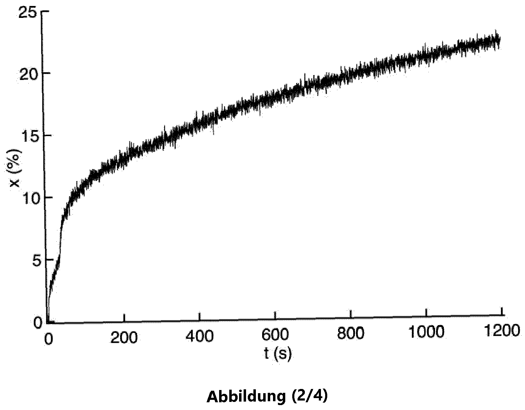

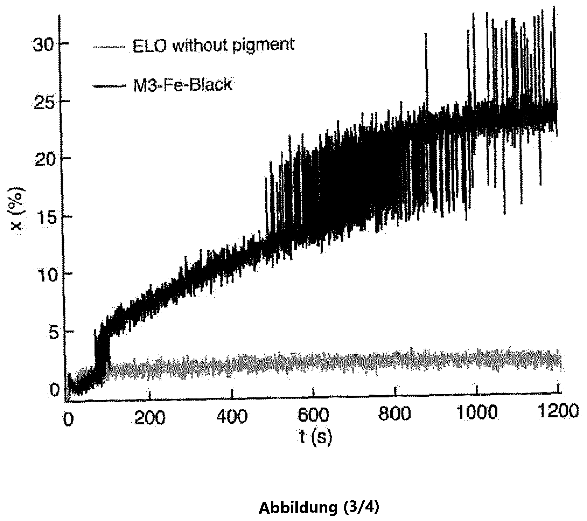

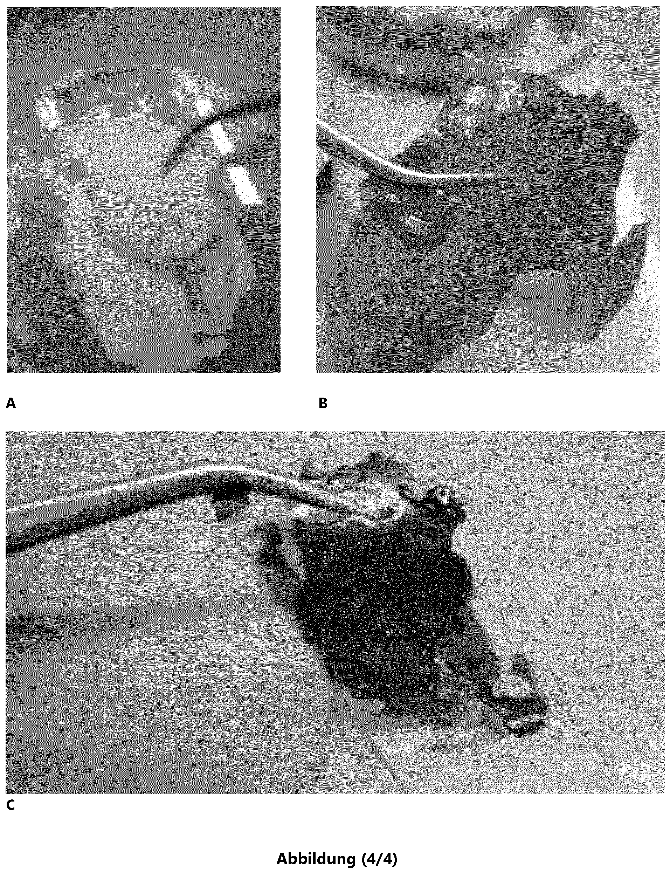

Beispiele für die photoinduzierte kationische Polymerisation (UV-Härtung) von Epoxiden in Gegenwart von silanisierten Eisenpigmenten sind im **Abbildung 1** dargestellt. Hierbei sind deutliche Unterschiede zwischen dem mit Octadecyltrimethylsilan (ODTMS) modifizierten schwarzen (ODTMS-AS-Fe-schwarz-06), roten (ODTMS-Fe-rot-05) und gelbem (DMS-AS-Fegelb-07) Eisenpigment in der photoinduzierten kationischen Polymerisation von epoxidiertem Leinöl erkennbar.

In der nachfolgenden **Tabelle 3** sind weitere Beispiele für die Verfilmung durch kationische Polymerisation unter Verwendung der desaktivierten oxidischen Partikel wiedergegeben.

**Tabelle 3**

| Kationische Polymerisation von Epoxiden in Gegenwart von Pigmenten bei Initiierung mit Licht | | | | | | | | |
|---|---|---|---|---|---|---|---|---|
| **Bsp.** | **λₑₓₚ (nm)** | **Sens.** | **Onium.** | **Anion** | **Monomer** | **Pigment** | **Bsp.** | **x_{∞} (%)** |
| Con. | 395 | UV-S1 | SB-2 | A2 | ELO | Rutil | keine | 0 |
| 23 | 395 | UV-S1 | SB-2 | A2 | ELO | Rutil | 2 | 53 |
| 24 | 395 | UV-S1 | SB-2 | A2 | E1 | Rutil | 2 | 49 |
| 25 | 395 | UV-S1 | SB-2 | A2 | E2 | Rutil | 2 | 58 |
| 26 | 395 | UV-S1 | SB-2 | A2 | E3 | Rutil | 2 | 59 |
| 27 | 395 | UV-S1 | SB-2 | A2 | E4 | Rutil | 2 | 63 |
| 28 | 395 | UV-S1 | SB-2 | A2 | E5 | Rutil | 2 | 61 |
| 29 | 395 | UV-S1 | SB-2 | A2 | E6 | Rutil | 2 | 59 |
| 30 | 395 | UV-S1 | SB-2 | A2 | E7 | Rutil | 2 | 63 |
| 31 | 395 | UV-S1 | SB-2 | A2 | E8 | Rutil | 2 | 64 |
| 32 | 395 | UV-S1 | SB-2 | A2 | E9 | Rutil | 2 | 61 |
| 33 | 395 | UV-S1 | SB-2 | A2 | E10 | Rutil | 2 | 59 |
| 34 | 395 | UV-S1 | SB-2 | A2 | E11 | Rutil | 2 | 65 |
| 35 | 395 | UV-S2 | SB-2 | A2 | ELO | Rutil | 2 | 51 |
| 36 | 395 | UV-S3 | SB-2 | A2 | ELO | Rutil | 2 | 54 |
| 37 | 395 | UV-SR1 | SB-2 | A2 | E11 | Rutil | 2 | 56 |
| 38 | 395 | UV-SR2 | SB-2 | A2 | ELO | Rutil | 2 | 54 |
| 39 | 395 | UV-SR3 | SB-2 | A2 | ELO | Rutil | 2 | 55 |
| 40 | 395 | UV-SR4 | SB-2 | A2 | E11 | Rutil | 2 | 57 |
| 41 | 395 | UV-SR5 | SB-2 | A2 | ELO | Rutil | 2 | 53 |
| 42 | 395 | UV-SR6 | SB-2 | A2 | ELO | Rutil | 2 | 55 |
| 43 | 395 | UV-S1 | SB-2 | A2 | E1 | Rutil | 1 | 60 |
| 44 | 395 | UV-S1 | SB-2 | A2 | E2 | Rutil | 3 | 65 |
| 45 | 395 | UV-S1 | SB-2 | A2 | E3 | Rutil | 4 | 62 |
| 46 | 395 | UV-S1 | SB-2 | A2 | E4 | Rutil | 5 | 59 |
| 47 | 395 | UV-S1 | SB-2 | A2 | E5 | Rutil | 6 | 58 |
| 48 | 395 | UV-S1 | SB-2 | A2 | E6 | Rutil | 7 | 62 |
| 49 | 395 | UV-S1 | SB-2 | A2 | E7 | Rutil | 2 | 64 |
| 50 | 395 | UV-S1 | SB-2 | A2 | E8 | Rutil | 3 | 61 |
| 51 | 395 | UV-S1 | SB-2 | A2 | E9 | Rutil | 4 | 61 |
| 52 | 395 | UV-S1 | SB-2 | A2 | E10 | Rutil | 5 | 65 |
| 53 | 395 | UV-S1 | SB-2 | A2 | E11 | Rutil | 6 | 64 |
| 54 | 395 | UV-S1 | SB-2 | A2 | E3 | Rutil | 8 | 61 |
| 55 | 395 | UV-S1 | SB-2 | A2 | E3 | Rutil | 9 | 59 |
| 56 | 395 | UV-S1 | SB-2 | A2 | E3 | Rutil | 10 | 66 |
| 57 | 395 | UV-S1 | SB-2 | A2 | E3 | Rutil | 11 | 63 |
| 58 | 395 | UV-S1 | SB-2 | A2 | E3 | Rutil | 12 | 64 |
| 59 | 395 | UV-S1 | SB-2 | A2 | E3 | Rutil | 13 | 61 |
| 60 | 395 | UV-S1 | SB-2 | A2 | E3 | Rutil | 14 | 59 |
| 61 | 395 | UV-S1 | SB-2 | A2 | E3 | Rutil | 15 | 63 |
| 62 | 395 | UV-S1 | SB-2 | A2 | E3 | Rutil | 16 | 62 |
| 63 | 395 | UV-S1 | SB-2 | A2 | E3 | Rutil | 17 | 64 |
| 64 | 395 | UV-S1 | SB-2 | A2 | E3 | Rutil | 18 | 66 |
| 65 | 395 | UV-S1 | SB-1 | A2 | ELO | Rutil | 21 | 52 |
| 66 | 395 | UV-S1 | SB-1 | A1 | ELO | Rutil | 2 | 41 |
| 67 | 395 | UV-S1 | SB-3 | A3 | ELO | Rutil | 1 | 53 |
| 68 | 395 | UV-S1 | SB-4 | A4 | ELO | Rutil | 3 | 56 |
| 69 | 395 | UV-S1 | SB-5 | A5 | ELO | Rutil | 4 | 61 |
| 70 | 395 | UV-S1 | SB-6 | A6 | ELO | Rutil | 5 | 65 |
| 71 | 395 | UV-S2 | SB-5 | A5 | ELO | Rutil | 6 | 67 |
| 72 | 395 | UV-S3 | SB-5 | A5 | ELO | Rutil | 7 | 64 |
| 73 | 395 | UV-R1 | SB-5 | A5 | ELO | Rutil | 1 | 65 |
| 74 | 395 | UV-R2 | SB-5 | A5 | ELO | Rutil | 2 | 62 |
| 75 | 395 | UV-R3 | SB-5 | A5 | ELO | Rutil | 3 | 59 |
| 76 | 395 | UV-R4 | SB-5 | A5 | ELO | Rutil | 4 | 64 |
| 77 | 395 | UV-R5 | SB-5 | A5 | ELO | Rutil | 5 | 65 |
| 78 | 395 | UV-R6 | SB-5 | A5 | ELO | Rutil | 6 | 62 |
| 79 | 395 | - | SB-3 | A5 | ELO | Rutil | 7 | 67 |
| 80 | 395 | - | SB-4 | A5 | ELO | Rutil | 1 | 64 |
| 81 | 395 | UV-R6 | SB-5 | A5 | ELO | Fe-Oxid gelb | 2 | 53 |
| 82 | 395 | UV-R6 | SB-5 | A5 | ELO | Fe-Oxid gelb | 3 | 51 |
| 83 | 395 | UV-R6 | SB-5 | A5 | ELO | Fe-Oxid rot | 4 | 49 |
| 84 | 395 | UV-R6 | SB-5 | A5 | ELO | Fe-Oxid rot | 5 | 48 |
| 85 | 395 | UV-R6 | SB-5 | A5 | ELO | Fe-Oxid schwarz | 6 | 49 |
| 86 | 395 | UV-R6 | SB-5 | A5 | ELO | Fe-Oxid schwarz | 7 | 51 |
| 87 | 395 | UV-R6 | SB-5 | A5 | ELO | Fe-Oxid schwarz | 8 | 52 |
| Con. | 820 | NIR-S1 | SB-2 | A5 | ELO | Rutil | keine | 0 |
| 88 | 820 | NIR-S1 | SB-2 | A5 | ELO | Rutil | 1 | 43 |
| 89 | 820 | NIR-S1 | SB-5 | A5 | ELO | Rutil | 2 | 47 |
| 90 | 820 | NIR-S1 | SB-6 | A5 | ELO | Rutil | 3 | 48 |
| 91 | 820 | NIR-S2 | SB-5 | A5 | ELO | Rutil | 4 | 42 |
| 92 | 820 | NIR-S3 | SB-5 | A5 | ELO | Rutil | 5 | 48 |
| 93 | 820 | NIR-S1 | SB-5 | A5 | ELO | Rutil | 6 | 44 |
| 94 | 820 | NIR-S1 | SB-5 | A5 | ELO | Rutil | 7 | 41 |
| 95 | 820 | NIR-S1 | SB-5 | A5 | ELO | Rutil | 8 | 49 |
| 96 | 820 | NIR-S1 | SB-5 | A5 | ELO | Rutil | 9 | 43 |
| 97 | 820 | NIR-S1 | SB-5 | A5 | ELO | Rutil | 10 | 45 |
| 98 | 820 | NIR-S1 | SB-5 | A5 | ELO | Rutil | 11 | 44 |
| 99 | 820 | NIR-S1 | SB-5 | A5 | ELO | Rutil | 12 | 46 |

### Kurze Beschreibung der Abbildungen

Die vorliegende Erfindung wird des Weiteren durch die folgenden 4 Abbildungen weiter erläutert. Ohne darauf eingeschränkt zu sein.

| | |
|---|---|
| Abb. 1: | Photoinduzierte Polymerisation von ELO in Kombination mit ITX (1 Gew%) und 1.5 Gew% Bis(t-butylphenyl) iodonium hexafluorophosphat mit 1 Gew% TiOz basiertem Pigment (Rutil), welches gemäß Beispiel 2 ("Variante 1") bzw. Beispiel 8 ("Variante 2") desaktiviert wurde. Das Diagramm zeigt eine verfilmte Probe. Die Bestrahlung erfolgte bei 395 nm mit einer LED, die eine Leistung von 1.5 W/cm² hatte. |
| Abb. 2: | Photoinduzierte Polymerisation von ELO in Kombination mit NIR-S1 (0.5 Gew%) und 1.5 Gew% Bis(t-butylphenyl) iodonium hexafluorophosphat mit 1 Gew% TiOz basiertem Pigment (Rutil), welches gemäß Beispiel 2 desaktiviert wurde. Die Bestrahlung erfolgte bei 820 nm mit einer LED, die eine Leistung von 1 W/cm² hatte. |
| Abb. 3: | Photoinduzierte Polymerisation von ELO in Kombination mit NIR-S1 (0.5 Gew%) und 1.5 Gew% Bis(t-butylphenyl) iodonium hexafluorophosphat mit 1 Gew% Iron Black basiertem Pigment, welches gemäß Beispiel 5 desaktiviert wurde. Die Bestrahlung erfolgte bei 820 nm mit einer LED, die eine Leistung von 1 W/cm² hatte. Zum Vergleich wird eine Bestrahlung ohne Pigment gezeigt, was noch einmal dokumentiert, dass gerade der Zusatz der ummantelten Pigmente zur Polymerisation des Epoxids führte. |
| Abb. 4: | Beispiele für die photoinduzierte kationische Polymerisation von epoxidiertem Leinöl (ELO) in Gegenwart von Pigment (z. B. a) Titandioxidpigment (Rutil), b) rotes Eisenoxidpigment, c) schwarzes Eisenoxidpigment), welches durch die mit langen aliphatischen Ketten funktionalisierten Stärke modifiziert war, und in Gegenwart eines Photoinitiatorsystems mit Hilfe einer einfachen UV-Lichtquelle für die Dünnschichtchromatographie ausgelöst wurde. |

## Patentansprüche

1. Verfahren zur Beschichtung von harten Oberflächen mit Pigmentfilmen durch UV- und/oder NIR-induzierte kationische Polymerisation, umfassend die folgenden Schritte:
(i) Bereitstellen einer zu beschichtenden Oberfläche;
(ii) Bereitstellen mindestens eines oxidischen Pigmentes mit nukleophil-desaktivierter Oberfläche;
(iii) Bereitstellen mindestens einer Epoxidverbindung;
(iv) Bereitstellen mindestens eines UV- und/oder NIR-Sensibilisators;
(v) Bereitstellen mindestens eines Oniumsalzes; sowie
(vi) Bereitstellen einer UV- und/oder NIR-Lichtquelle;
wobei man
(a) die Komponenten (ii), (iii), (iv), (v) zu einer Mischung verarbeitet,
(b) die Mischung auf die zu beschichtende Oberfläche (i) aufträgt; und
(c) die Oberfläche mit der Lichtquelle (vi) bestrahlt, wobei die Mischung verfilmt.

2. Verfahren nach Anspruch 1, **dadurch gekennzeichnet, dass** man als harte Oberfläche Bleche einsetzt.

3. Verfahren nach mindestens einem der Ansprüche 1 und/oder 2, **dadurch gekennzeichnet, dass** man nukleophil-desaktivierte oxidische Pigmente (Komponente (ii) einsetzt, die durch polymerisations-induzierte Verkapselung oder Ummantelung mit (Meth)AcrylatMonomeren erhalten werden.

4. Verfahren nach mindestens einem der Ansprüche 1 bis 3, **dadurch gekennzeichnet, dass** man nukleophil-desaktivierte oxidische Pigmente (Komponente (ii) einsetzt, die durch Silanisierung ihrer Oberflächen erhalten werden.

5. Verfahren nach mindestens einem der Ansprüche 1 bis 3, **dadurch gekennzeichnet, dass** man nukleophil-desaktivierte oxidische Pigmente einsetzt, die durch Stärke-Hydrophobierung ihrer Oberflächen erhalten werden.

6. Verfahren nach mindestens einem der Ansprüche 1 bis 5, **dadurch gekennzeichnet, dass** man nukleophil-desaktivierte oxidische Pigmente (Komponente (ii) einsetzt, die ausgewählt sind aus der Gruppe, die gebildet wird von Titanoxid und gelbem, roten oder schwarzen Eisenoxid.

7. Verfahren nach mindestens einem der Ansprüche 1 bis 6, **dadurch gekennzeichnet, dass** man Epoxidverbindungen (Komponente iii) einsetzt, die ausgewählt sind aus der Gruppe, die gebildet wird von den folgenden Strukturen E1 bis E11 sowie deren Gemischen:

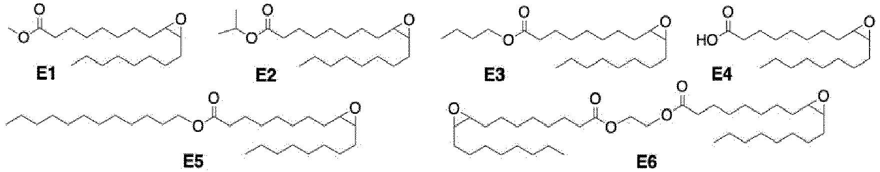

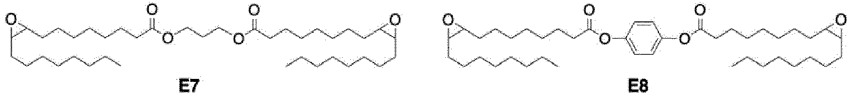

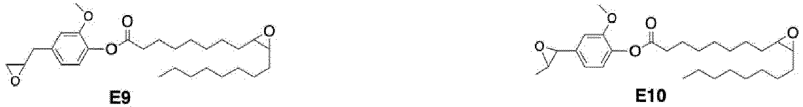

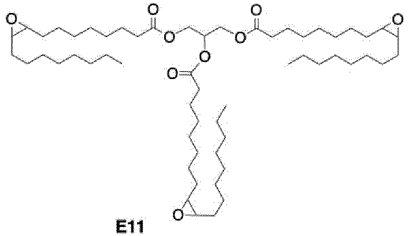

8. Verfahren nach mindestens einem der Ansprüche 1 bis 7, **dadurch gekennzeichnet, dass** man UV- und/oder NIR-Sensibilisatoren (Komponente iv) einsetzt, die ausgewählt sind aus der Gruppe, die gebildet wird von folgenden Strukturen: 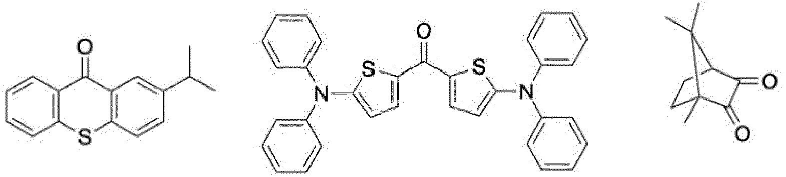 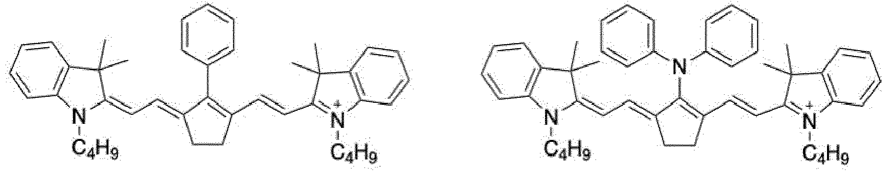 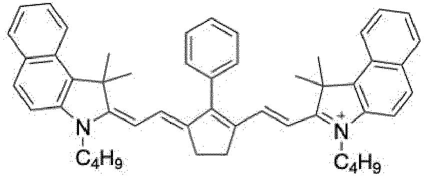 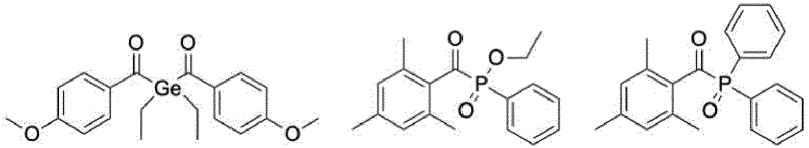 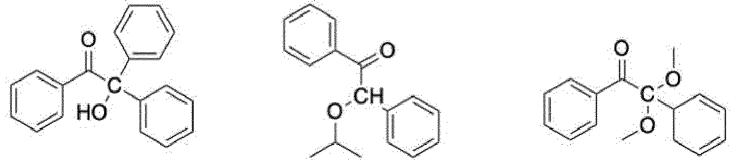 sowie deren Mischungen.

9. Verfahren nach mindestens einem der Ansprüche 1 bis 8, **dadurch gekennzeichnet, dass** man Oniumsalze (Komponente v) einsetzt, die aus Kationen und Anionen bestehen, wobei
- die Kationen ausgewählt sind aus der Gruppe, die gebildet wird von folgenden Strukturen: 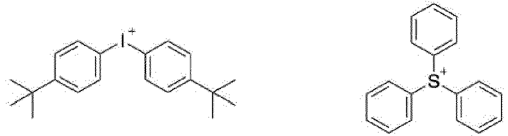 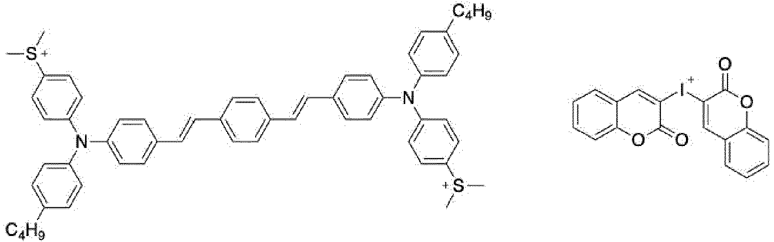
- und die Anionen ausgewählt sind aus der Gruppe, die gebildet wird von folgenden Strukturen:

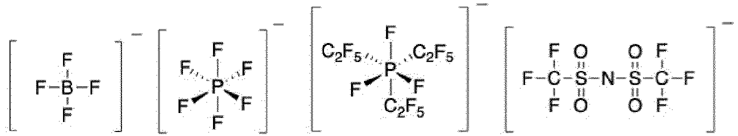

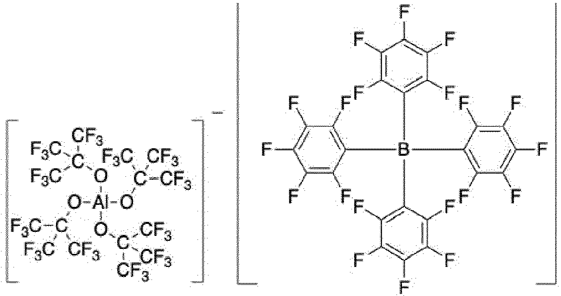

10. Verfahren nach mindestens einem der Ansprüche 1 bis 9, **dadurch gekennzeichnet, dass** man als UV- und/oder eine NIR-Lichtquelle UV-LEDs (390 bis 420 nm) und/oder NIR-LEDs (810-830 nm) einsetzt.

11. Oxidische Pigmente mit desaktivierter nukleophiler Oberfläche, erhältlich oder erhalten durch die folgenden Schritte:
(A1) Bereitstellen mindestens eines oxidischen Pigmentes;
(A2) Bereitstellen mindestens einer (Meth)Acrylverbindung;
(A3) Vermischen von mindestens einem oxidischen Pigment und von mindestens einer (Meth)Acrylverbindung unter Zugabe eines Lösungsmittels sowie eines Emulgators unter Ausformung einer Miniemulsion;
(A4) Zugabe eines Polymerisationsinitiators
(A5) Radikalische Polymerisation der (Meth)Acrylverbindungen unter Einschluss der oxidischen Polymeren; sowie
(A6) Abtrennen, Waschen und Trocknen der so erhaltenen Kapseln.

12. Oxidische Pigmente mit desaktivierter nukleophiler Oberfläche, erhältlich oder erhalten durch die folgenden Schritte:
(B1) Bereitstellen mindestens eines oxidischen Pigmentes;
(B2) Bereitstellen mindestens einer Silanverbindung;
(B3) Vermischen von mindestens einem oxidischen Pigment mit mindestens einer Silanverbindung gegebenenfalls unter Zugabe eines Lösungsmittels;
(B4) Rühren der Mischung bei einer Temperatur von etwa 90 bis etwa 120 °C über einen Zeitraum von etwa 12 bis etwa 36 Stunden in Gegenwart eines Katalysators;
(B5) Abtrennen, Waschen und Trocknen der so oberflächensilanierten Pigmente.

13. Oxidische Pigmente mit desaktivierter nukleophiler Oberfläche, erhältlich oder erhalten durch die folgenden Schritte:
(C1) Bereitstellen mindestens eines oxidischen Pigmentes;
(C2) Bereitstellen mindestens einer chemisch modifizierten Stärke;
(C3) Vermischen von mindestens einem oxidischen Pigment mit mindestens einer chemisch modifizierten Stärke, gegebenenfalls unter Zugabe eines Lösungsmittels;
(C4) Abtrennen, Waschen und Trocknen der so oberflächenhydrophobierten Pigmente.

14. Durch UV- und/oder NIR-Strahlung induzierte kationische Polymerisation verfilmbare Zusammensetzung enthaltend und/oder bestehend aus:
(ii) mindestens ein oxidisches Pigment mit nukleophil-desaktivierter Oberfläche;
(iii) mindestens eine Epoxidverbindung;
(iv) mindestens ein UV und/oder NIR-Sensibilisator; sowie
(v) mindestens eine Oniumverbindung.

15. Verwendung der Zusammensetzung nach Anspruch 14 zur Beschichtung von harten Oberflächen durch UV- und/oder NIR-induzierte kationische Polymerisation.
